(19) Europäisches Patentamt
European Patent Office
Office européen des brevets

(11) Publication number: **0 367 861 B1**

# EUROPEAN PATENT SPECIFICATION

(45) Date of publication of patent specification: **17.03.93**

(51) Int. Cl.5: **B23K 9/28**, B23K 9/02, B23K 9/12

(21) Application number: **88118852.8**

(22) Date of filing: **11.11.88**

(54) **Apparatus for automatically fillet-welding object to be welded comprising rectangular bottom plate and four side plates tack-welded substantially vertically to said bottom plate.**

(43) Date of publication of application:
**16.05.90 Bulletin 90/20**

(45) Publication of the grant of the patent:
**17.03.93 Bulletin 93/11**

(84) Designated Contracting States:
**DE FR GB IT SE**

(56) References cited:
**DE-A- 3 502 630**
**US-A- 3 777 834**
**US-A- 4 704 513**

(73) Proprietor: **NKK CORPORATION**
**1-2 Marunouchi 1-chome, Chiyoda-ku**
**Tokyo(JP)**

(72) Inventor: **Sugitani, Yuji**
**c/o NKK CORPORATION 1-2, 1-chome**
**Marunouchi Chiyoda-ku Tokyo(JP)**
Inventor: **Tamaoki, Naohiro**
**c/o NKK CORPORATION 1-2, 1-chome**
**Marunouchi Chiyoda-ku Tokyo(JP)**

(74) Representative: **Henkel, Feiler, Hänzel & Part-**
**ner**
**Möhlstrasse 37**
**W-8000 München 80 (DE)**

# EP 0 367 861 B1

**Description**

The present invention relates to an apparatus for automatically fillet-welding an object to be welded comprising a rectangular bottom plate and four side plates tack-welded substantially vertically to the bottom plate, along a weld line formed thereon.

## BACKGROUND OF THE INVENTION

In order to fillet-weld an object to be welded comprising a rectangular bottom plate and four side plates tack-welded substantially vertically to the bottom plate, along a weld line formed thereon, it is the usual practice to automatically weld only the straight portion of the weld line by means of a self-travelling welding machine, and then manually weld the remaining four corner portions of the weld line.

The above-mentioned conventional welding method has however the following problems. Since the weld line is fillet-welded by automatic welding and manual welding, the weld bead height cannot be kept constant, thus tending to cause unstable quality of the fillet-welded joint and a low welding efficiency.

Under such circumstances, there is a demand for the development of a welding apparatus which permits automatic fillet-welding at a high efficiency of an object to be welded comprising a rectangular bottom plate and four side plates tack-welded substantially vertically to the bottom plate, along a weld line formed thereon, and maintenance of a constant weld bead height, thus allowing stabilization of quality of a fillet-welded joint, but such a welding apparatus has not as yet been proposed.

US-A-4,704,513 discloses a groove tracing control method for a fillet welding effected by rotating a welding torch and thereby rotating an arc at a high speed. This prior art groove tracing control of the welding torch is effected in accordance with variations in the voltage waveform of the rotating arc and in this way the groove tracing is effected in real time in a noncontact manner with a high degree of accuracy.

US-A-3,777,834 discloses a magnet vehicle supportedly adhered to and adapted to run over an inclined wall surface of a structural member made of a strong magnetic material such as iron and steel. Said vehicle can be altered of its direction of travel as desired on said surface.

EP-A1-0 367 850 which falls under Article 54,3 EPC discloses an apparatus for automatically fillet-welding an object to be welded comprising a rectangular plate and four side plates tack-welded substantially vertically to said bottom plate.

## SUMMARY OF THE INVENTION

An object of the present invention is therefore to provide a welding apparatus which permits automatic fillet-welding at a high efficiency of an object to be welded comprising a rectangular bottom plate and four side plates tack-welded substantially vertically to the bottom plate, along a weld line formed thereon, and maintenance of a constant weld bead height, thus allowing stabilization of quality of a fillet-welded joint.

In accordance with one of the features of the present invention there is provided an apparatus for automatically fillet-welding an object to be welded comprising a rectangular bottom plate and four side plates tack-welded substantially vertically to said bottom plate, comprising the features of claim 1.

## BRIEF DESCRIPTION OF THE DRAWINGS

Fig. 1 is a schematic plan view illustrating an embodiment of the fillet-welding apparatus of the present invention;
Fig. 2 is a schematic side view illustrating the fillet-welding apparatus of the present invention shown in Fig. 1;
Fig. 3 is a schematic side view illustrating the rod and the rod lift mechanism in the fillet-welding apparatus of the present invention;
Fig. 4 is a schematic bottom view illustrating the fillet-welding apparatus of the present invention shown in Fig. 1;
Figs. 5(A) to 5(I) are schematic descriptive plan views illustrating function of the fillet-welding apparatus of the present invention;
Fig. 6 is a block diagram illustrating control of the fillet-welding apparatus of the present invention by means of the welding controller;
Fig. 7 is a descriptive view illustrating control of the X-axis profiling mechanism by the X-axis profiling controller in the fillet-welding apparatus of the present invention;

2

Fig. 8 is a descriptive view illustrating control of the carriage direction change speed by means of the carriage travel controller in the fillet-welding apparatus of the present invention;

Fig. 9 is a descriptive view illustrating determination of the completion of welding by means of the welding completion controller in the fillet-welding apparatus of the present invention; and

Fig. 10 is a block diagram illustrating the steps of fillet-welding of the corner portion of the object to be welded by means of the fillet-welding apparatus of the present invention.

## DETAILED DESCRIPTION OF PREFERRED EMBODIMENTS

From the above-mentioned point of view, extensive studies were carried out to develop a welding apparatus which permits automatic fillet-welding at a high efficiency of an object to be welded comprising a rectangular bottom plate and four side plates tack-welded substantially vertically to the bottom plate, along a weld line formed thereon, and maintenance of a constant weld bead height, thus allowing stabilization of quality of a fillet-welded joints. As a result, there was obtained the finding that it is possible to automatically fillet-weld at a high efficiency the above-mentioned object to be welded along a weld line formed thereon, by mounting, on a carriage travellable on the bottom plate of the object to be welded in parallel with the four side plates and capable of changing the direction thereof, a welding head comprising a welding nozzle for guiding a welding wire toward a weld line, an X-axis profiling mechanism for horizontally moving the welding nozzle, and a Y-axis profiling mechanism for vertically moving the welding nozzle; providing at least one carriage front sensor on the front side of the carriage relative to the travelling direction of the carriage and two carriage rear sensors on the rear side of the carriage relative to the travelling direction of the carriage; and controlling the X-axis profiling mechanism, the Y-axis profiling mechanism and a carriage travelling motor by means of a welding controller.

The present invention was achieved on the basis of the above-mentioned finding. Now, the fillet-welding apparatus of the present invention is described in detail with reference to drawings.

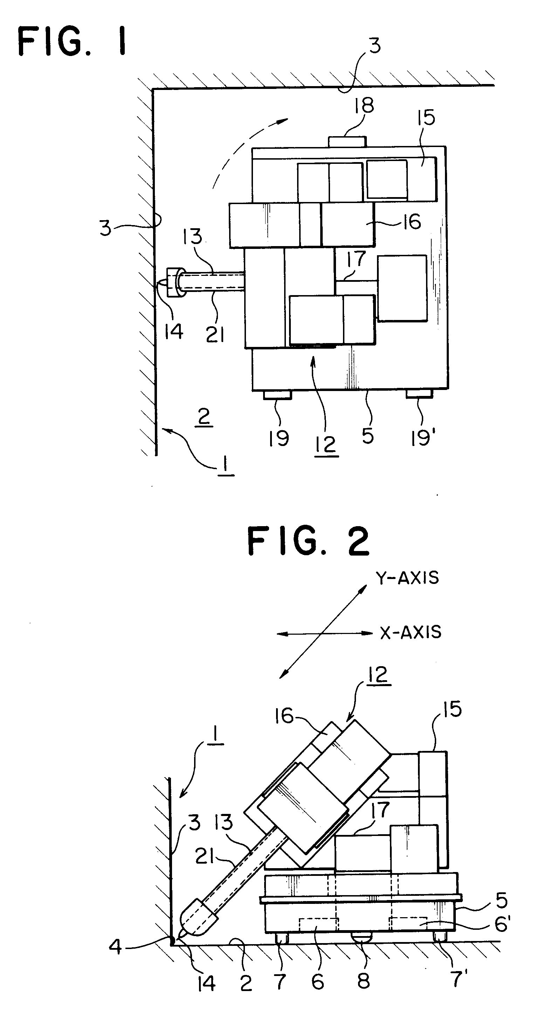

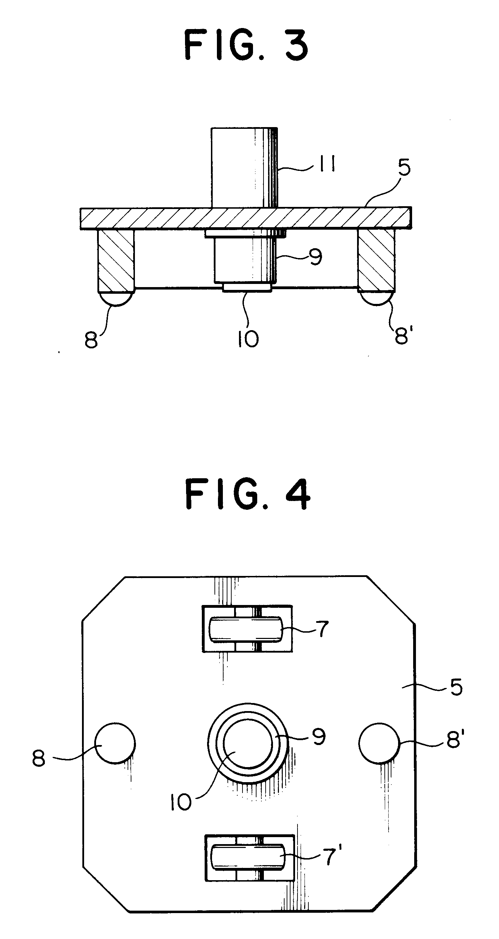

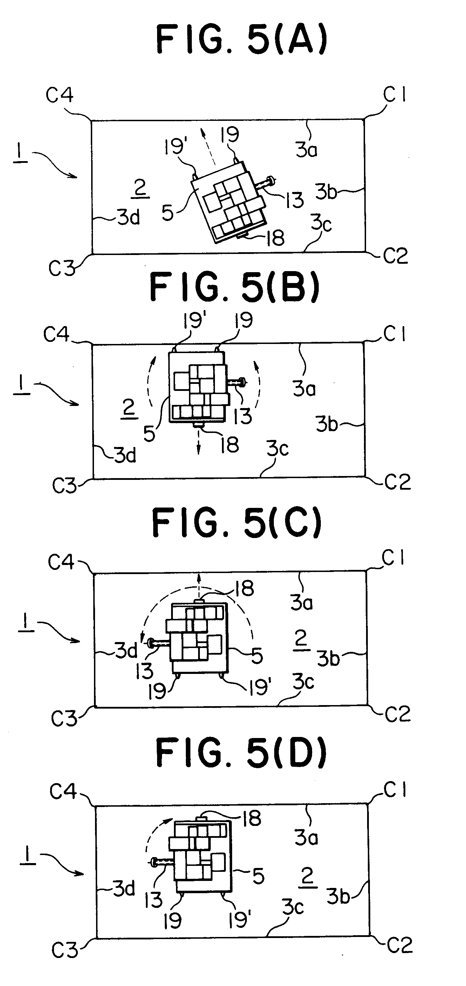

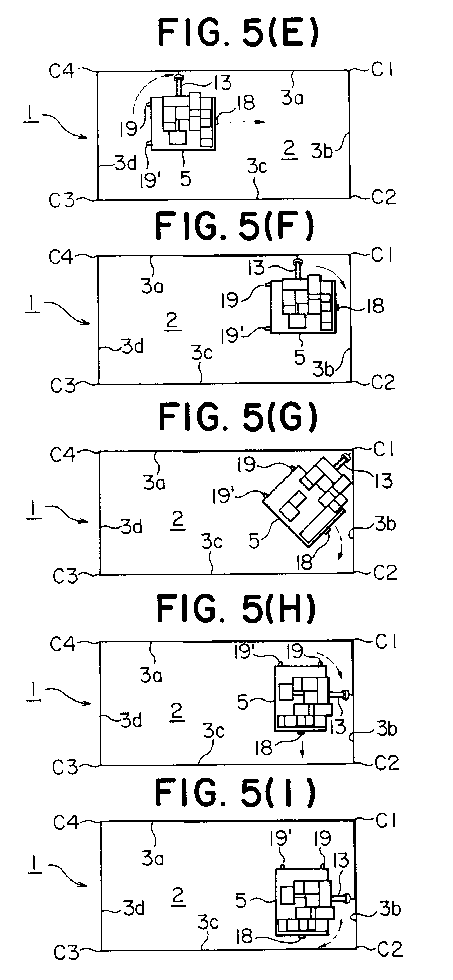

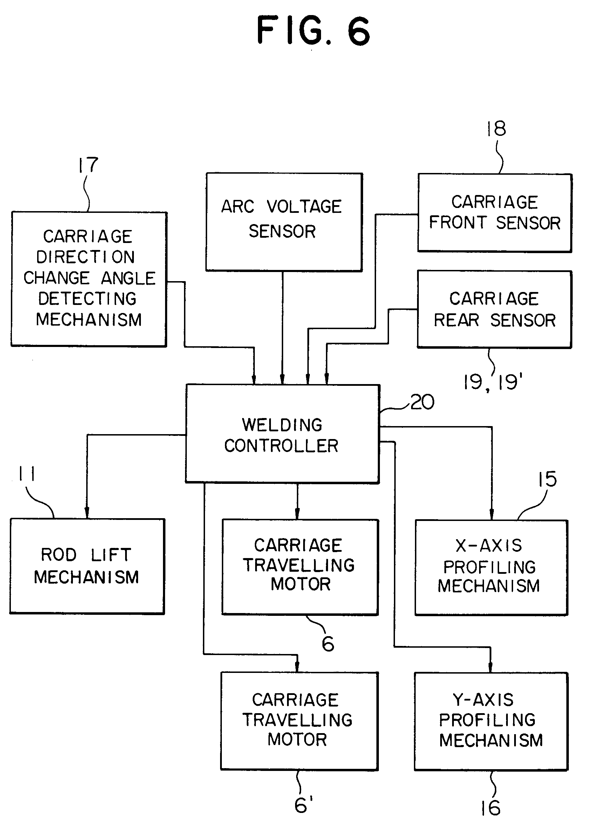

Fig. 1 is a schematic plan view illustrating an embodiment of the fillet-welding apparatus of the present invention; Fig. 2 is a schematic side view illustrating the fillet-welding apparatus of the present invention shown in Fig. 1; Fig. 3 is a schematic side view illustrating the rod and the rod lift mechanism in the fillet-welding apparatus of the present invention; Fig. 4 is a schematic bottom view illustrating the fillet-welding apparatus of the present invention; Figs. 5(A) to 5(I) are schematic descriptive plan views illustrating function of the fillet-welding apparatus of the present invention; and Fig. 6 is a block diagram illustrating control of the fillet-welding apparatus of the present invention by means of the welding controller.

As shown in Figs. 1, 2, 3, 4, 5(A) to 5(I) and 6, the apparatus of the present invention for automatically fillet-welding an object to be welded 1 comprising a rectangular bottom plate 2 and four side plates 3 tack-welded substantially vertically to the bottom plate 2, along a weld line 4 formed on the object to be welded 1, comprises: a carriage 5 travellable on the bottom plate 2 of the object to be welded 1 in parallel with the four side plates 3 thereof and capable of changing the direction; a rod 9 having an electromagnet 10 at the lower end thereof, vertically passing through the carriage 5 at the center thereof and vertically movable; a rod lift mechanism 11 provided on the carriage 5; a welding head 12 mounted on the carriage 5; a carriage direction change angle detecting mechanism 17 provided on the carriage 5; a carriage position detecting mechanism comprising at least one carriage front sensor 18 provided on the front side of the carriage 5 relative to the travelling direction thereof, and two carriage rear sensors 19, 19' provided on the rear side of the carriage 5 relative to the travelling direction thereof; and a welding controller 20.

The carriage 5 has a pair of wheels 7, 7' each having an independent carriage travelling motor 6, 6', provided on two opposing sides of the carriage 5, and a pair of casters 8, 8' provided on the other opposing sides of the carriage 5. The carriage 5 travels forward or back by positively or negatively driving both the carriage travelling motors 6, 6'. The carriage 5 changes the direction thereof by positively driving one of the carriage travelling motors 6, 6' and negatively driving the other one thereof.

The rod 9 descends onto the bottom plate 2 of the object to be welded 1 when the carriage 5 changes the direction thereof to serve as the center axle for the change in direction of the carriage 5 through adhesion of the electromagnet 10 to the bottom plate 2. The rod lift mechanism 11 comprises for example a solenoid. By magnetically exciting the solenoid, the rod 9 moves upward, and by releasing magnetical excitation of the solenoid, the rod 9 descends onto the bottom plate 2.

The welding head 12 comprises a welding nozzle 13 for guiding a welding wire 14 toward the weld line 4 formed between the bottom plate 2 and the side plates 3 of the object to be welded 1, an X-axis profiling mechanism 15 for moving the welding nozzle 13 horizontally and at right angles to the weld line 4 so that the extension of the center axis of the welding nozzle 13 intersects the weld line 4, and a Y-axis profiling mechanism 16 for moving the welding nozzle 13 along the center axis thereof so that a gap between the tip of the welding wire 14 and the weld line 4 is kept at a prescribed constant distance.

The welding nozzle 13 rotates at a high speed in a certain direction around the center axis thereof. The welding wire 14 is fed through the welding nozzle 13 toward the weld line 4, eccentrically from the center axis of the welding nozzle 13. In Figs. 1 and 2, 21 is a shielding gas feeding nozzle provided concentrically on the outside of the welding nozzle 13. The shielding gas feeding nozzle 21 is secured to the welding head 12. Welding current is supplied between the welding wire 14 and the object to be welded 1 from a welding electric power source not shown, whereby an arc is produced between the tip of the welding wire 14 and the object to be welded 1. The thus produced arc acts a circular motion corresponding to the above-mentioned eccentricity of the welding wire 14 along with the rotation of the welding nozzle 13. The bottom plate 2 and the side plates 3 are fillet-welded together by the heat of the thus produced arc along the weld line 4 formed thereon. The arc and a molten pool are shielded from the open air by a shielding gas ejected from the shielding gas feeding nozzle 21.

The X-axis profiling mechanism 15 comprises, for example, a rack and pinion mechanism (not shown), and moves the welding nozzle 13, together with the Y-axis profiling mechanism 16, horizontally and at right angles to the weld line 4 as described above, in the X-axis direction shown by an arrow in Fig. 2. The Y-axis profiling mechanism 16 also comprises, for example, a rack and pinion mechanism (not shown), and moves the welding nozzle 13 along the center axis thereof as described above, in the Y-axis direction shown by an arrow in Fig. 2.

The carriage direction change angle detecting mechanism 17 comprises, for example, an encoder, and detects a direction change angle of the carriage 5 from a home position thereof. The carriage position detecting mechanism comprises at least one carriage front sensor 18, provided on the front side of the carriage 5 relative to the travelling direction thereof, for detecting a distance from the front side of the carriage 5 to the side plate 3 perpendicular to the travelling direction of the carriage 5, and two carriage rear sensors 19, 19', provided on the rear side of the carriage 5 relative to the travelling direction thereof, for detecting a distance from the rear side of the carriage 5 to the side plate 3 perpendicular to the travelling direction of the carriage 5. The carriage front sensor 18 comprises, for example, a photosensor, and the carriage rear sensors 19, 19' comprise, for example, limit switches.

The welding controller 20 shown in Fig. 6 comprises an X-axis profiling controller, a Y-axis profiling controller, a carriage travel controller, a rod lift controller and a welding completion controller. An arc voltage detected by an arc voltage sensor, a direction change angle of the carriage 5 from the home position thereof, as detected by the carriage direction change angle detecting mechanism 17, a distance from the front side of the carriage 5 to the side plate perpendicular to the travelling direction of the carriage 5, as detected by the carriage front sensor 18, and a distance from the rear side of the carriage 5 to the side plate 3 perpendicular to the travelling direction of the carriage 5, as detected by the carriage rear sensors 19, 19' are entered into the welding controller 20.

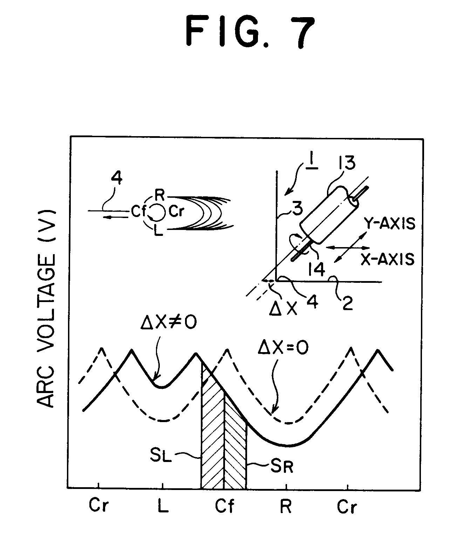

The X-axis profiling controller controls the X-axis profiling mechanism 15 in response to any one of voltage and current of the welding current so that the extension of the center axis of the welding nozzle 13 intersects the weld line 4. Control of the X-axis profiling mechanism 15 by means of the X-axis profiling controller is described below further in detail. Fig. 7 shows the waveform of voltage of the welding current, i.e., the waveform of arc voltage for each rotation of the welding nozzle 13. In Fig. 7, points "Cf", "Cr", "L" and "R" show positions of the welding wire 14 (i.e., the arc) during one rotation thereof, as viewed in a plan, in the weld line 4 of the object to be welded 1. More particularly, point "Cf" represents the downstream position in the welding direction, point "Cr", the upstream position in the welding direction, and points "L" and "R", the both side positions in the welding direction.

In Fig. 7, the broken line represents the wave form of arc voltage in the case where the extension of the center axis of the welding nozzle 13 intersects the weld line 4, i.e., in the case of $\Delta X = 0$. As shown in Fig. 7, when the extension of the center axis of the welding nozzle 13 intersects the weld line 4, arc voltage shows the highest value at points "Cf" and "Cr" where the distance between the tip of the welding wire 14 and the object to be welded 1 is the longest. On the other hand, arc voltage shows the lowest value at points "L" and "R" where the distance between the tip of the welding wire 14 and the object to be welded 1 is the shortest. Arc voltage has a waveform symmetrical relative to point "Cf" or "Cr".

In Fig. 7, the solid line represents the waveform of arc voltage in the case where the extension of the center axis of the welding nozzle 13 does not intersect the weld line 4, and deviates from the weld line 4 toward the side plate 3, i.e., in the case of $\Delta X \neq 0$. As shown in Fig. 7, when the extension of the center axis of the welding nozzle 13 does not intersect the weld line 4, arc voltage has a waveform asymmetrical relative to point "Cf" or "Cr". Therefore, calculation is performed of the integral value "$S_L$" of arc voltage detected by the arc voltage sensor within a certain phase angle from point "Cf" toward point "L", and the integral value "$S_R$" of arc voltage also detected by the arc voltage sensor within a certain phase angle from point "Cf" toward point "R", for each rotation of the welding nozzle 13, and then of the difference between these integral values "$S_L$" and "$S_R$". The X-axis profiling mechanism 15 is controlled by the X-axis profiling controller so that the thus calculated difference becomes zero to move the welding nozzle 13 horizontally and at right angles to the weld line 4. It is thus possible to cause the extension of the center axis of the welding nozzle 13 to intersect the weld line 4. The value of each of the above-mentioned phase angle from point "Cf" toward point "L" and the phase angle from point "Cf" toward point "R" should preferably be up to 90°. With a value of the phase angle of over 90°, the waveform of arc voltage is distorted under the effect of the molten pool present in the upstream in the welding direction, and this may make it impossible to conduct accurate control of the X-axis profiling mechanism 15 by means of the X-axis profiling controller. The above-mentioned control can also be accomplished with the use of the welding current instead of arc voltage described above.

The Y-axis profiling controller controls the Y-axis profiling mechanism 16 to move the welding nozzle 13 along the center axis thereof in response to any one of voltage and current of the welding current so that the gap between the tip of the welding wire 14 and the weld line 4 is kept at a prescribed constant distance.

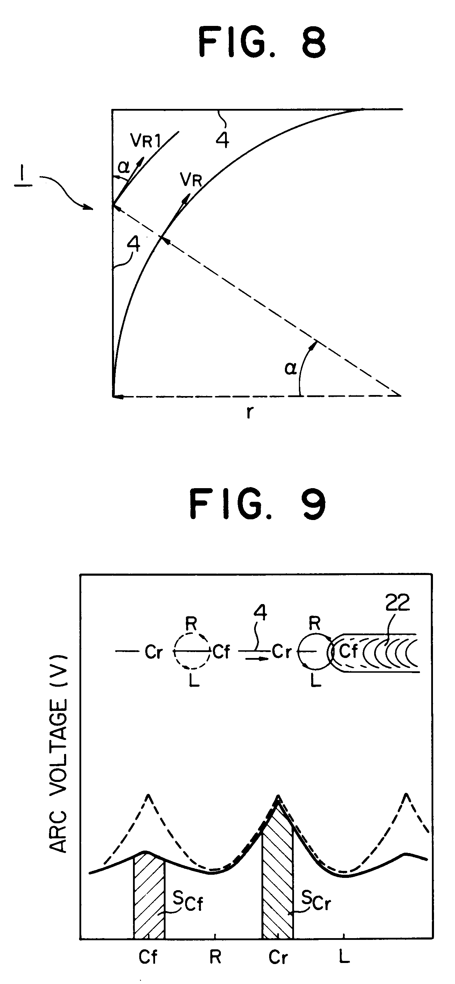

The carriage travel controller controls the carriage travelling motors 6, 6' in response to signals from the carriage front sensor 18, the carriage rear sensors 19, 19' and the carriage direction change angle detecting mechanism 17 so as to cause the carriage 5 to travel, stop or change the direction thereof. The carriage travel controller further controls the carriage travelling motors 6, 6' in response to a signal from the carriage direction change angle detecting mechanism 17 upon direction change of the carriage 5 so as to adjust a carriage direction changing speed. Control of the carriage travelling motors 6, 6' by means of the carriage travel controller upon direction change of the carriage is described below further in detail. Fig. 8 shows the relationship between a swing radius of the welding nozzle 13 and a welding speed when welding a corner portion of the object to be welded 1 along the weld line 4 by means of the welding nozzle 13 swinging along with the direction change of the carriage 5. In Fig. 8, "$\alpha$" is a swing angle of the welding nozzle 13, and "r" is a standard swing radius of the welding nozzle 13 upon start of swinging. If a swing speed component in the tangential direction of the swing arc when the welding nozzle 13 swings with the standard swing radius "r" is "$V_R$", a swing speed component in the tangential direction of the swing arc when the welding nozzle 13 swings while altering the swing radius so that the extension of the center axis of the welding nozzle 13 intersects the weld line 4 and the gap between the tip of the welding wire 14 and the weld line 4 is kept at a prescribed constant distance is "$V_R1$", and a welding speed of the welding nozzle 13 along the weld line 4 is "$V_W$", then the following formulae (1) and (2) hold:

$$V_R1 = \frac{r}{\cos \alpha \ \times \ r} \ \times \ V_R$$

$$= \frac{V_R}{\cos \alpha} \qquad \cdots\cdots\cdots \qquad (1)$$

$$V_W = \frac{V_R1}{\cos \alpha} \qquad \cdots\cdots\cdots \qquad (2)$$

The following formulae (3) and (4) can be derived from the above-mentioned formulae (1) and (2):

When $0 \leqq \alpha < \frac{\pi}{4}$ :
$V_R = V_W \times \cos^2\alpha$    (3)

When $\frac{\pi}{4} \leqq \alpha < \frac{\pi}{2}$ :
$V_R = V_W \times \sin^2\alpha$    (4)

These formulae (3) and (4) are entered in advance into the carriage travel controller. The carriage travel controller controls the carriage travelling motors 6, 6' in response to a signal from the carriage direction change angle detecting mechanism 17, i.e., the swing angle "$\alpha$" of the welding nozzle 13 in accordance with the above-mentioned formulae (3) and (4). Thus, the welding speed "$V_W$" along the weld line 4 upon swinging of the welding nozzle 13 is kept at a prescribed constant value.

The rod lift controller controls the rod lift mechanism 11 in response to signals from the carriage front sensor 18 and the carriage direction change angle detecting mechanism 17 so as to vertically move the rod 9.

The welding completion controller controls the carriage travelling motors 6, 6' and a welding electric power source not shown in response to any one of voltage and current of the welding current so as to determine the completion of welding, cause the carriage 5 to stop travelling, and cause the welding electric power source to discontinue supply of the welding current. Control of the carriage travelling motors 6, 6' and the welding electric power source by means of the welding completion controller is described below further in detail. Fig. 9 shows the waveform of voltage of the welding current, i.e., the waveform of arc voltage for each rotation of the welding nozzle 13 in the close vicinity of the welding completion position. In Fig. 9, points "Cf", "Cr", "L" and "R" show positions of the welding wire 14 (i.e., the arc) during one rotation thereof, as viewed in a plan, in the weld line 4 of the object to be welded 1. More particularly, point "Cf" represents the downstream position in the welding direction, point "Cr" the upstream position in the welding direction, and points "L" and "R", the both side positions in the welding direction, as has been described with regard to Fig. 7. In Fig. 9, 22 represents a weld bead formed in the initial welding.

In Fig. 9, the broken line represents the waveform of arc voltage when welding is carried out at a position apart from the portion where the initial welding has already been done and the weld bead 22 has been formed. As shown in Fig. 9, arc voltage shows the highest value at points "Cf" and "Cr", and shows the lowest value at points "L" and "R".

In Fig. 9, the solid line represents the waveform of arc voltage when welding is carried out at a position where point "Cf" the welding wire 14 has reached the weld bead 22 formed in the initial welding, and point "Cr" of the welding wire 14 has not yet reached on the weld bead 22. As shown in Fig. 9, arc voltage at point "Cf" of the welding wire 14, which has reached the weld bead 22 is lower than arc voltage at point "Cr" of the welding wire 14, which has not yet reached the weld bead 22. Therefore, calculation is performed of the integral value "$S_{Cf}$" of arc voltage detected by the arc voltage sensor within a certain phase angle around point "Cf", and the integral value "$S_{Cr}$" of arc voltage also detected by the arc voltage sensor within a certain phase angle around point "Cr", for each rotation of the welding nozzle 13, and these integral values "$S_{Cf}$" and "$S_{Cr}$" are compared. As a result of the above-mentioned comparison, when the integral value "$S_{Cf}$" becomes smaller than the integral value "$S_{Cr}$" in several successive comparisons, the welding completion controller determines the completion of welding. At this moment, the welding completion controller controls the carriage travelling motors 6, 6' and the welding electric power source not shown so as to cause the carriage 5 to stop travelling and cause the welding electric power source to discontinue supply of the welding current. It is thus possible to automatically terminate welding at a position where the weld bead 22 formed in the initial welding exists. The above-mentioned control can be accomplished with the use of the welding current instead of arc voltage

Now, an embodiment is described below with reference to Figs. 5(A) to 5(I), in which an object to be welded 1 comprising a rectangular bottom plate 2 and four side plates 3a, 3b, 3c and 3d tack-welded substantially vertically to the bottom plate 2 and having corners C1, C2, C3 and C4 is automatically fillet-welded along a weld line formed thereon, with the use of the fillet-welding apparatus of the present invention described above.

First, as shown in Fig. 5(A), the carriage 5 is placed on the bottom plate 2 at an arbitrary position on the bottom plate 2. Then, the carriage travelling motors 6, 6' are driven to move the carriage 5 toward the side plate 3a facing the two carriage rear sensors 19, 19', in the direction indicated by an arrow so as to bring both of the two carriage rear sensors 19, 19' into contact with the side plate 3a. As a result, as shown in Fig. 5(B), the carriage 5 is positioned at right angles to the side plate 3a relative to the travel direction of the carriage. Then, the carriage travelling motors 6, 6' are driven to move the carriage 5 by a prescribed distance toward the side plate 3c facing the at least one carriage front sensor 18. Then, as shown by an arrow in Fig. 5(C), the carriage 5 is caused to change the direction thereof anticlockwise by 180° so that the carriage front sensor 18 faces the side plate 3a and the carriage rear sensors 19, 19' face the side plate 3c. Subsequently, the distance between the front of the carriage 5 and the side plate 3a is detected by the carriage front sensor 18. Then, as shown in Fig. 5(D), the carriage 5 is moved to a position where the gap between the tip of the welding wire 14 and the weld line becomes a prescribed distance when the welding nozzle 13 faces the side plate 3a as a result of the direction change of the carriage 5. Then, as shown by an arrow in Fig. 5(D), the carriage 5 is caused to change the direction thereof clockwise by 90° so that the welding nozzle 13 faces the side plate 3a. Thus, as shown in Fig. 5(E), the carriage is positioned at a welding starting point where the welding nozzle 13 is directed toward the side plate 3a. When the carriage 5 changes the direction thereof as described above, the rod 9 descends onto the bottom plate 2 and the electromagnet 10 at the lower end of the rod 9 is magnetically excited and adheres to the bottom plate 2, whereby the rod 9 serves as the center axle for the direction change.

The carriage 5 positioned at the welding starting point as described above travels as shown by an arrow in Fig. 5(E) toward the side plate 3b in parallel with the side plate 3a through driving of the carriage travelling motors 6, 6'. Thus, the bottom plate 2 and the side plate 3a are fillet-welded together along the weld line formed thereon as shown in Fig. 5(F), by means of the welding nozzle 13 rotating at a high speed around the center axis thereof. During this fillet-welding, as described above, the welding nozzle 13 is controlled by the X-axis profiling mechanism 15 and the X-axis profiling controller so that the extension of the center axis of the welding nozzle 13 intersects the weld line, and further, the welding nozzle 13 is controlled by the Y-axis profiling mechanism 16 and the Y-axis profiling controller so that the gap between the tip of the welding wire 14 and the weld line is kept at a prescribed constant distance. Furthermore, when the welding nozzle 13 deviates from the standard position thereof on the carriage 5 as a result of control of the welding nozzle 13 by means of the X-axis profiling mechanism 15 and the X-axis profiling controller as described above, the carriage travelling motors 6, 6' control the respective revolutions of the wheels 7, 7' of the carriage 5 so that the carriage 5 laterally moves so as to bring the welding nozzle 13 back to the standard position thereof. Thus, the carriage 5 travels in parallel with the side plate 3a while keeping the gap between the carriage 5 and the side plate 3a at a prescribed constant distance.

The carriage front sensor 18, which is provided on the front side of the carriage 5, detects the distance from the front side of the carriage 5 to the side plate 3b perpendicular to the travelling direction of the carriage 5. The carriage travelling motors 6, 6' are controlled by means of the carriage travel controller in response to a signal from the carriage front sensor 18, which indicates that the carriage 5 has reached the position at a prescribed distance from the side plate 3b, and the carriage 5 stops as shown in Fig. 5(F). The above-mentioned prescribed distance is predetermined on the basis of the swing radius of the welding nozzle 13 caused by the direction change of the carriage 5 and the distance of horizontal movement of the welding nozzle 13 by means of the X-axis profiling mechanism 15, and is entered in advance into the carriage travel controller.

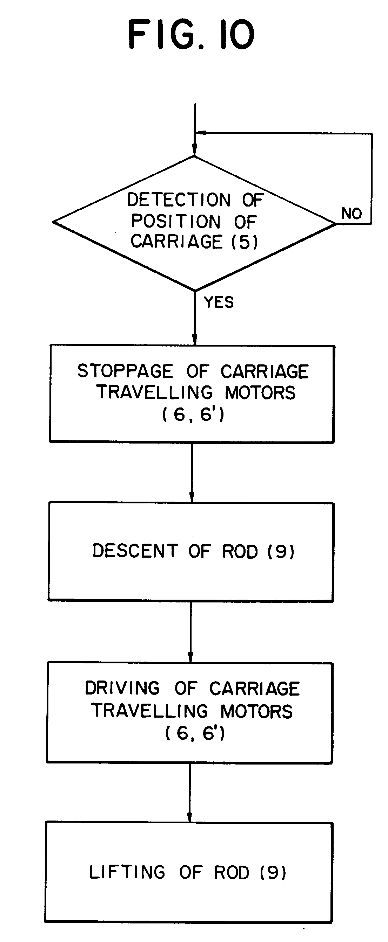

After stoppage of the carriage 5 in response to the signal from the carriage front sensor 18, magnetical excitation of the rod lift mechanism 11, i.e., the solenoid is released by the rod lift controller to cause the rod 9 to descend onto the bottom plate 2. The electromagnet 10 at the lower end of the rod 9 is excited and adheres to the bottom plate 2. Then, the carriage travel controller drives the carriage travelling motors 6, 6', and the carriage 5 changes the direction thereof by 90°, as shown by an arrow in Fig. 5(F), with the rod 9 having descended onto the bottom plate 2 as the center axle, while the direction changing speed thereof is controlled. Control of the direction changing speed of the carriage 5 is accomplished by detecting the direction change angle of the carriage 5 from the home position thereof by means of the carriage direction change angle detecting mechanism 17, and controlling the carriage travelling motors 6, 6' by means of the carriage travel controller in response to the thus detected direction change angle of the carriage 5. As the carriage 5 changes the direction thereof, the welding nozzle 13 swings horizontally by 90°, and as shown in Figs. 5(G) and 5(H), the corner C1 and the proximity thereof are fillet-welded together at a prescribed constant welding speed along the weld line. During this fillet-welding of the corner portion C1, the welding nozzle 13 is controlled by means of the X-axis profiling mechanism 15 and the X-axis profiling controller so that the extension of the center axis of the welding nozzle 13 intersects the weld line, as described above, and further, the welding nozzle 13 is controlled by the Y-axis profiling mechanism 16 and the Y-axis profiling controller so that the gap between the tip of the welding wire 14 and the weld line is kept at a prescribed constant distance. After the corner position C1 is thus fillet-welded, excitation of the electromagnet 10 is released and then the rod lift mechanism 11, i.e., the solenoid is excited by means of the rod lift controller. Thus, the rod 9 is moved upward from the bottom plate 2. Fig. 10 is a block diagram illustrating the steps for fillet-welding of the corner portion as described above by means of the fillet-welding apparatus of the present invention.

After the rod 9 is moved upward as described above, the carriage 5 is caused to travel, by driving of the carriage travelling motors 6, 6', in parallel with the side plate 3b toward the side plate 3c. Thus, the bottom plate 2 and the side plate 3b are fillet-welded together by means of the welding nozzle 13 along the weld line formed thereon as shown in Fig. 5(I). The carriage front sensor 18, which is provided on the front side of the carriage 5, detects the distance from the front side of the carriage 5 to the side plate 3c perpendicular to the travelling direction of the carriage 5. The carriage travelling motors 6, 6' are controlled by means of the carriage travel controller in response to a signal from the carriage front sensor 18, which indicates that the carriage 5 has reached the position at a prescribed distance from the side plate 3c, and the carriage 5 stops as shown in Fig. 5(I). Subsequently, as described above, the rod 9 is caused to descend onto the bottom plate 2 by means of the rod lift mechanism 11, and the electromagnet 10 at the lower end of the rod 9 adheres to the bottom plate 2. Then, as a result of driving of the carriage travelling motors 6, 6', the carriage 5 changes the direction thereof by 90° as shown by an arrow in Fig. 5(I) with the rod 9 as the center axle, while the direction chaning speed thereof is controlled. As the carriage 5 changes the direction thereof, the welding nozzle 13 swings horizontally by 90°, and the corner C2 and the proximity thereof are fillet-welded together at a prescribed constant welding speed along the weld line.

Then, in the same manner as in the case mentioned above, the carriage 5 travels in parallel with the side plate 3c toward the side plate 3d, stops at the position at a prescribed distance from the side plate 3d, and then changes the direction thereof by 90°. In the meantime, the bottom plate 2 and the side plate 3c, and the corner portion C3 are fillet-welded together along the weld line formed thereon. Then, the carriage 5 travels in parallel with the side plate 3d toward the side plate 3a, stops at the position at a prescribed distance from the side plate 3a, and then changes the direction thereof by 90°. In the meantime, the bottom plate 2 and the side plate 3d, and the corner portion C4 are fillet-welded together along the weld line formed thereon. Carriage 5 travels again in parallel with the side plate 3a toward the side plate 3b, and the portion not as yet welded between the bottom plate 2 and the side plate 3a is fillet-welded along the weld line formed thereon. When the carriage 5 reaches the already welded portion between the bottom plate 2 and the side plate 3a, the welding completion controller determines the completion of welding as described above. At this moment, the welding completion controller controls the carriage travelling motors 6, 6' and the welding electric power source not shown so as to cause the carriage 5 to stop travelling and to cause the welding electric power source to discontinue supply of the welding current.

As described above, the object to be welded 1 comprising the rectangular bottom plate 2 and the four side plates 3a, 3b, 3c and 3d tack-welded substantially vertically to the bottom plate 2 and having the four corners C1, C2, C3 and C4 is automatically fillet-welded along the weld line formed thereon.

According to the fillet-welding apparatus of the present invention, as described above in detail, it is possible to automatically fillet-weld at a high efficiency an object to be welded comprising a rectangular bottom plate and four side plates tack-welded substantially vertically to the bottom plate, along a weld line formed thereon, while keeping a constant weld bead height and a stable quality of a fillet-welded joint, thus providing industrially useful effects.

**Claims**

**1.** An apparatus for automatically fillet-welding an object to be welded comprising a rectangular bottom plate and four side plates tack-welded substantially vertically to said bottom plate, comprising:

a carriage (5) travellable on said bottom plate in parallel with said four side plates, said carriage having a pair of wheels (7, 7') each having an independent carriage travelling motor (6, 6'), provided on two opposing sides of said carriage (5), and a pair of casters (8, 8') provided on the other opposing sides of said carriage (5), thereby permitting a travel and a change of direction of said carriage (5) by means of said pair of wheels (7, 7') and said pair of casters (8, 8');

a rod (9) having an electromagnet (10) at the lower end thereof, vertically passing through said carriage (5) at the center thereof and vertically movable, said rod descending onto said bottom plate of said object to be welded when said carriage (5) changes the direction thereof to serve as the center axle for said change in direction through adhesion of said electromagnet (10) to said bottom plate;

a rod lift mechanism (11), provided on said carriage (5), for vertically moving said rod (9);

a welding head (12) mounted on said carriage (5), said welding head comprising a welding nozzle (13), rotating around the center axis thereof, for guiding a welding wire (14) toward a weld line of said object to be welded, an X-axis profiling mechanism (15) for moving said welding nozzle (13) horizontally and at right angles to said weld line so that the extension of the center axis of said welding nozzle (13) intersects said weld line, and a Y-axis profiling mechanism (16) for moving said welding nozzle (13) along the center axis thereof so that a gap between the tip of said welding wire (14) and said weld line is kept at a prescribed constant distance;

a carriage direction change angle detecting mechanism (17), provided on said carriage (5), for detecting a direction change angle of said carriage (5) from a home position thereof;

a carriage position detecting mechanism, said carriage position detecting mechanism comprising at least one carriage front sensor (18), provided on the front side of said carriage (5) relative to the travelling direction thereof, for detecting a distance from the front side of said carriage (5) to said side plate perpendicular to the travelling direction of said carriage (5), and two carriage rear sensors (19, 19'), provided on the rear side of said carriage (5) relative to the travelling direction thereof, for detecting a distance from the rear side of said carriage (5) to said side plate perpendicular to the travelling direction of said carriage (5); and

a welding controller (20), said welding controller comprising an X-axis profiling controller for controlling said X-axis profiling mechanism (15) in response to any one of voltage and current of a welding current so that the extension of the center axis of said welding nozzle (13) intersects said weld line, a Y-axis profiling controller for controlling said Y-axis profiling mechanism (16) in response to any one of voltage and current of said welding current so that a gap between the tip of said welding wire (14) and said weld line is kept at a prescribed constant distance, a carriage travel controller for controlling said carriage travelling motors (6, 6') in response to signals from said carriage position detecting mechanism (18, 19, 19') and said carriage direction change angle detecting mechanism (17) so as to cause said carriage (5) to travel, stop or change the direction, a rod lift controller for controlling said rod lift mechanism (11) in response to signals from said at least one carriage front sensor (18) and said carriage direction change angle detecting mechanism (17) so as to vertically move said rod (9), and a welding completion controller for controlling said carriage travelling motors (6, 6') and a welding electric power source in response to any one of voltage and current of said welding current so as to determine the completion of welding, cause said carriage (5) to stop travelling, and cause said welding electric power source to discontinue supply of said welding current.

## Patentansprüche

1. Gerät zum selbsttätigen bzw. automatischen Kehlnahtschweißen eines Schweißgegenstands, bestehend aus einer rechteckigen Bodenplatte und vier im wesentlichen lotrecht zur Bodenplatte heftgeschweißten Seitenplatten, umfassend:

einen auf der Bodenplatte parallel zu den vier Seitenplatten verfahrbaren Wagen (5) mit zwei auf zwei gegenüberliegenden Seiten des Wagens (5) vorgesehenen Rädern (7, 7') mit jeweils einem unabhängigen Wagenverfahrmotor (6, 6') sowie zwei an den anderen gegenüberliegenden Seiten des Wagens (5) vorgesehenen Laufrollen (8, 8'), um damit eine Laufbewegung und eine Richtungsänderung des Wagens (5) mittels der beiden Räder (7, 7') und der beiden Laufrollen (8, 8') zu ermöglichen,

eine an ihrem unteren Ende einen Elektromagneten (10) aufweisende, den Wagen (5) in seinem Zentrum lotrecht durchsetzende und lotrecht verschiebbare Stange (9), die bei einer Richtungsänderung des Wagens (5) auf die Bodenplatte des Schweißgegenstands absenkbar ist, um durch Haften des Elektromagneten (10) an der Bodenplatte als Mittelachse für die Richtungsänderung zu dienen,

einen am Wagen (5) vorgesehenen Stangenhebemechanismus (11) zum lotrechten Verschieben der Stange (9),

einen am Wagen (5) montierten Schweißkopf (13) mit einem um seine Mittelachse rotierenden Schweißdrahthalter (13) zum Führen eines Schweißdrahts (14) in Richtung auf eine Schweißlinie des Schweißgegenstands, mit einem X-Achsennachführmechanismus (15), um den Schweißdrahthalter (13) waagerecht und unter einem rechten Winkel zur Schweißlinie zu bewegen, so daß die Verlängerung der Mittelachse des Schweißdrahthalters (13) die Schweißlinie schneidet, und mit einem Y-Achsennachführmechanismus (16) zum Verschieben des Schweißdrahthalters (13) längs seiner Mittelachse, so daß ein Spalt oder Abstand zwischen der Spitze des Schweißdrahts (14) und der Schweißlinie auf einer Vorgeschriebenen konstanten Größe gehalten wird,

einen am Wagen (5) vorgesehenen Wagenrichtungsänderungswinkel-Detektormechanismus (17) zum Erfassen eines Richtungsänderungswinkels des Wagens (5) aus einer Ausgangsstellung desselben,

einen Wagenstellung-Detektormechanismus mit mindestens einem an der Stirnseite des Wagens (5) relativ zu seiner Laufrichtung vorgesehenen Wagenstirnseitensensor (18) zum Erfassen eines Abstands von der Stirnseite des Wagens (5) zu der Seitenplatte senkrecht zur Laufrichtung des Wagens (5) und mit zwei an der Rückseite des Wagens (5) relativ zu dessen Laufrichtung vorgesehenen Wagenrückseitensensoren (19, 19') zum Erfassen eines Abstands von der Rückseite des Wagens (5) zu der Seitenplatte senkrecht zur Laufrichtung des Wagens (5), sowie

eine Schweißsteuereinheit (20), umfassend eine X-Achsennachführsteuerung zum Steuern des X-Achsennachführmechanismus (15) in Abhängigkeit von Spannung oder Stromstärke eines Schweißstroms in der Weise, daß die Verlängerung der Mittelachse des Schweißdrahthalters (13) die Schweißlinie schneidet, eine Y-Achsennachführsteuerung zum Steuern des Y-Achsennachführmechanismus (16) in Abhängigkeit von Spannung oder Stromstärke des Schweißstroms in der Weise, daß ein Spalt oder Abstand zwischen der Spitze des Schweißdrahts (14) und der Schweißlinie auf einer vorgeschriebenen konstanten Größe gehalten wird, eine Wagenverfahrsteuerung zum Steuern der Wagenverfahrmotoren (6, 6') in Abhängigkeit von Signalen vom Wagenstellung-Detektormechanismus (18, 19, 19') und vom Wagenrichtungsänderungswinkel-Detektormechanismus (17), um den Wagen (5) fahren, anhalten oder seine Richtung ändern zu lassen, eine Stangenhebesteuerung zum Steuern des Stangenhebemechanismus (11) in Abhängigkeit von Signalen von dem mindestens einen Wagenstirnseitensensor (18) und dem Wagenrichtungsänderungswinkel-Detektormechanismus (17) für das lotrechte Verschieben der Stange (9) sowie eine Schweißabschlußsteuerung zum Steuern der Wagenverfahrmotoren (6, 6') und einer elektrischen Schweißstromquelle in Abhängigkeit von Spannung oder Stromstärke des Schweißstroms, um damit den Abschluß des Schweißens zu bestimmen, den Wagen (5) seine Bewegung anhalten zu lassen und die elektrische Schweißstromquelle die Zuspeisung des Schweißstroms beenden zu lassen.

**Revendications**

1. Appareil de soudage automatique d'angle d'un objet à souder comprenant une plaque inférieure rectangulaire et quatre plaques latérales, soudées localement afin qu'elles soient sensiblement perpendiculaires à la plaque inférieure, l'appareil comprenant :

un chariot (5) destiné à se déplacer sur la plaque inférieure parallèlement aux quatre plaques latérales, le chariot ayant une paire de roues (7, 7') ayant chacune un moteur indépendant (6, 6') de déplacement de chariot, les roues étant placées de deux côtés opposés du chariot (5), et deux roulettes (8, 8') placées sur les deux autres côtés opposés du chariot (5) et permettant ainsi un déplacement et un changement de direction du chariot (5) à l'aide de la paire de roues (7, 7') et de la paire de roulettes (8, 8'),

une tige (9) ayant un électro-aimant (10) à son extrémité inférieure, passant verticalement à travers le chariot (5) au centre de celui-ci et mobile verticalement, la tige descendant sur la plaque inférieure de l'objet à souder lorsque le chariot (5) change de direction pour être utilisée comme axe central du changement de direction par adhérence de l'électro-aimant (10) à la plaque inférieure,

un mécanisme (11) de soulèvement de tige, placé sur le chariot (5) et destiné à déplacer verticalement la tige (9),

une tête (12) de soudage montée sur le chariot (5), la tête de soudage comportant une buse de soudage (13), tournant autour de son axe central, destinée à guider un fil de soudage (14) vers une ligne de soudage de l'objet à souder, un mécanisme (15) de profilage d'axe X destiné à déplacer la buse de soudage (13) horizontalement et perpendiculairement à la ligne de soudage afin que le prolongement de l'axe central de la buse de soudage (13) recoupe la ligne de soudage, et un mécanisme (16) de profilage d'axe Y destiné à déplacer la buse de soudage (13) le long de son axe central afin que la distance comprise entre le bout du fil de soudage (14) et la ligne de soudage garde une dimension constante prescrite,

un mécanisme (17) de détection d'angle de changement de direction de chariot, disposé sur le chariot (5) et destiné à détecter un angle de changement de direction du chariot (5) par rapport à une position de repos,

un mécanisme de détection de position de chariot, ce mécanisme comprenant au moins un capteur avant (18) de chariot, placé du côté avant du chariot (5) dans la direction de déplacement de celui-ci et destiné à détecter la distance comprise entre la face avant du chariot (5) et la plaque latérale perpendiculaire à la direction de déplacement du chariot (5), et deux capteurs arrière (19, 19') de chariot, placés à l'arrière du chariot (5) par rapport à la direction de déplacement de celui-ci et destinés à détecter la distance comprise entre le côté arrière du chariot (5) et la plaque latérale perpendiculaire à la direction de déplacement du chariot (5), et

un organe (20) de commande de soudage qui comporte un organe de commande de profilage d'axe X destiné à commander le mécanisme (15) de profilage d'axe X en fonction de la tension ou de l'intensité d'un courant de soudage afin que le prolongement de l'axe central de la buse de soudage (13) recoupe la ligne de soudage, un organe de commande de profilage d'axe Y destiné à commander le mécanisme (16) de profilage d'axe Y en fonction de la tension ou de l'intensité du courant de soudage afin qu'un espace compris entre le bout du fil de soudage (14) et la ligne de soudage garde une dimension constante prescrite, un organe de commande de déplacement de chariot destiné à commander les moteurs (6, 6') de déplacement de chariot en fonction de signaux provenant du mécanisme (18, 19, 19') de détection de position de chariot et du mécanisme (17) de détection d'angle de changement de direction de chariot afin que le chariot (5) se déplace, s'arrête ou change de direction, un organe de commande de soulèvement de tige destiné à commander le mécanisme (11) de soulèvement de tige en fonction de signaux provenant d'au moins un capteur avant (18) de chariot et du mécanisme (17) de détection d'angle de changement de direction de chariot afin que la tige (9) soit déplacée verticalement, et un organe de commande de fin de soudage destiné à commander les moteurs (6, 6') de déplacement de chariot et une alimentation électrique de soudage en fonction de la tension ou de l'intensité du courant de soudage afin que la fin du soudage soit déterminée, que le chariot (5) cesse de se déplacer, et que l'alimentation électrique de soudage cesse de transmettre le courant de soudage.

# FIG. 1

# FIG. 2

Y-AXIS

X-AXIS

# FIG. 3

# FIG. 4

# FIG. 5(A)

# FIG. 5(B)

# FIG. 5(C)

# FIG. 5(D)

# FIG. 5(E)

# FIG. 5(F)

# FIG. 5(G)

# FIG. 5(H)

# FIG. 5(I)

# FIG. 6

# FIG. 7

# FIG. 8

# FIG. 9

# FIG. 10

```
      ┌─────────────────┐
      ▼                 │
   ╱─────────────╲      │
  ╱  DETECTION OF ╲  NO │
 ╱   POSITION OF   ╲────┘
 ╲   CARRIAGE (5)  ╱
  ╲               ╱
   ╲─────────────╱
         │ YES
         ▼
 ┌───────────────────────┐
 │  STOPPAGE OF CARRIAGE │
 │   TRAVELLING MOTORS   │
 │        ( 6, 6' )      │
 └───────────────────────┘
         │
         ▼
 ┌───────────────────────┐
 │                       │
 │   DESCENT OF ROD (9)  │
 │                       │
 └───────────────────────┘
         │
         ▼
 ┌───────────────────────┐
 │  DRIVING OF CARRIAGE  │
 │   TRAVELLING MOTORS   │
 │        ( 6, 6' )      │
 └───────────────────────┘
         │
         ▼
 ┌───────────────────────┐
 │                       │
 │   LIFTING OF ROD (9)  │
 │                       │
 └───────────────────────┘
```